# EUROPÄISCHE PATENTSCHRIFT

(11) **EP 3 345 750 B1**
(45) Veröffentlichungstag und Bekanntmachung des Hinweises auf die Patenterteilung: **22.05.2019**
(21) Anmeldenummer: 17150841.9
(22) Anmeldetag: 10.01.2017
(51) Int. Cl.: B29C 70/32, B29C 70/02, B29C 65/50, B29C 65/00, F16L 9/128, B32B 1/08

(54) **THERMOPLASTISCHES COMPOSITROHR MIT MEHRSCHICHTIGER ZWISCHENLAGE**
THERMOPLASTIC COMPOSITE PIPE WITH MULTILAYERED INTERMEDIATE LAYER
TUYAU COMPOSITE THERMOPLASTIQUE COMPRENANT UNE COUCHE INTERMÉDIAIRE MULTICOUCHE

(43) Veröffentlichungstag der Anmeldung: 11.07.2018
(73) Patentinhaber: Evonik Degussa GmbH, 45128 Essen (DE)
(72) Erfinder: BERGER, Jasmin, 44141 Dortmund (DE); RIES, Hans, 45772 Marl (DE); FRANOSCH, Jürgen, 45770 Marl (DE); GÖRING, Rainer, 46325 Borken (DE); BEYER, Horst, 45770 Marl (DE)

(56) Entgegenhaltungen:
- EP-A1- 0 685 674
- WO-A1-95/07428

## Beschreibung

Gegenstand der Erfindung ist ein flexibles, faserverstärktes Compositrohr, das einen Innenliner (im Folgenden auch kurz "Liner" genannt), eine oder mehrere Tapelagen sowie eine zwischen Innenliner und Tapelage angeordnete, diese verbindende ein- oder mehrschichtige Zwischenlage enthält, sowie ein Verfahren zu dessen Herstellung. Das Material des Innenliners, die Matrix der Tapelagen sowie die Polymere der Zwischenlage sind thermoplastisch. Das erfindungsgemäße Compositrohr wird für die Öl- und Gasförderung eingesetzt, insbesondere für die Offshore-Förderung von Öl oder Gas, als Riser, als Umbilical, für den Transport des geförderten Öls oder Gases über den Meeresboden vom Bohrloch zum Riser oder für den Transport an Land.

Im Stand der Technik werden für diesen Anwendungsbereich sehr häufig sogenannte Unbonded Flexible Pipes verwendet. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen sowie als Schutz gegen äußere mechanische Belastungen.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe", 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht haftend miteinander verbunden sind. In der Praxis enthält das Rohr mindestens drei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

In herkömmlichen Unbonded Flexible Pipes bestehen die Armierungsschicht oder die Armierungsschichten meistens aus spiralförmig angeordneten Stahldrähten, Stahlprofilen oder Stahlbänden, wobei die einzelnen Schichten mit verschiedenen Windungswinkeln relativ zur Rohrachse ausgebildet sein können (Zugarmierung) sowie einer primär in Umfangsrichtung gewickelten Druckarmierung. Bei solchen Unbonded Flexible Pipes ist der Stahlanteil den korrosiven Einflüssen des geförderten Mediums ausgesetzt. Wegen der daraus resultierenden Materialwahl sowie der aufwendigen Konstruktion sind derartige Rohre verhältnismäßig teuer. Das hohe Eigengewicht ist insbesondere bei längeren Risern für die Offshore-Ölförderung in der Tiefsee sehr nachteilig.

Seit einiger Zeit werden Entwicklungen beschrieben, bei denen thermoplastische Compositrohre, auch Thermoplastic Composite Pipes genannt, zur Anwendung kommen. Dies sind Rohre, die als Innenlage einen ein- oder mehrschichtigen Innenliner (nachfolgend auch Liner genannt) aus thermoplastischem Material aufweisen. Auf diesen wird, stoffschlüssig verbunden oder in manchen Fällen auch unverbunden, eine Composit-Lage zum Beispiel durch Aufwickeln unidirektional faserverstärkter Tapes aufgebracht. Derartige Compositrohre werden beispielweise in der WO 95/07428 und der WO 99/67561 beschrieben. Ihre Herstellung wird darüber hinaus in der WO 02/095281, der WO 2006/107196, der WO 2012/118378, der WO 2012/118379 und der WO 2013/188644 beschrieben.

Bei diesen Compositrohren ist es ein generelles Problem, dass die Haftung zwischen einer faserreichen Tapelage und der angrenzenden Oberfläche bei suboptimaler Materialkombination nicht ausreichend ist, um die Beanspruchungen bei der Installation und im Betrieb insbesondere in Offshore-Anwendungen, wie die Anbindungen an Fittings oder die Montage mit Greifvorrichtungen, sowie die harten Testbedingungen, denen derartige Konstruktionen unterworfen werden, zu überstehen. Beispielhaft sei hier die Ablösung von Schichten im Rapid Gas Decompression Test oder bei Einwirkung starker Biegekräfte genannt. Im Stand der Technik wird daher vorzugsweise angestrebt, für die Tapematrix und eine angrenzende Oberfläche, beispielsweise die Außenoberfläche des Innenliners, artgleiches Polymer einzusetzen (hierzu etwa "Thermoplastic Composite Pipe: An Analysis And Testing Of A Novel Pipe System For Oil & Gas"; Vortrag von J.L.C.G. de Kanter und J. Leijten auf dem Kongress ICCM 17 in Edinburgh, UK, 2009)

Bei Thermoplastic Composite Pipes mit einwandigen Linern kommen im niedrigen Temperaturbereich (bis ca. 50 °C Dauertemperatur) Linerrohre aus Polyethylen zum Einsatz, bei höheren Temperaturen bis ca. 80 °C Linerrohre aus Polyamiden wie PA11 oder PA12. Bei noch höheren Temperaturen werden hochpreisige Werkstoffe wie Polyvinylidendifluorid (PVDF) oder sogar Polyetheretherketon (PEEK) eingesetzt. Unter Berücksichtigung der Anforderungen an Chemikalien-, Alterungs- und Temperaturbeständigkeit können in vielen Fällen Composites mit einer Matrix aus PA11 oder PA12 eingesetzt werden. Allgemein stellt sich aber bei der Kombination ungleicher Materialien die Frage, wie die nötige Haftung zwischen Tapelage und Liner beziehungsweise Tapelage und Außenhülle erzielt werden soll.

In neuerer Zeit wurden insbesondere bei Unbonded Flexible Pipes Entwicklungen veröffentlicht, bei denen der Innenliner nicht mehr aus einem einwandigen Rohr, sondern aus einem Mehrschichtrohr mit in der Regel zwei oder drei Schichten besteht. Derartige mehrschichtige Kunststoffrohre sind seit vielen Jahren aus dem Bereich der Kraftstoffleitungen für Kraftfahrzeuge bekannt. Allerdings sind die hierfür verfügbaren Extrusionsanlagen für Rohre mit kleinen Durchmessern, das heißt für Durchmesser von deutlich weniger als 50 mm und in der Regel für Durchmesser von 6 bis 12 mm ausgelegt. Für Anwendungen im Öl- und Gasbereich werden jedoch deutlich größere Durchmesser - üblich sind je nach Anwendung Innendurchmesser von 1 bis 10 Zoll (25,4 bis 254 mm) - gefordert. Anlagen, die diese Durchmesser produzieren können, stehen aber meist nur für die Herstellung von einschichtigen Rohren zur Verfügung. Eine Umrüstung vorhandener Mehrschichtanlagen auf große Durchmesser oder eine Umrüstung von vorhandenen Monorohranlagen für mehrschichtige Großrohre ist mit hohem Zeit- und Kostenaufwand verbunden und zum Teil wegen des Platzbedarfs kaum möglich. Darüber hinaus sind die angestrebten Polymerkombinationen von Lineroberfläche und Tapematrix mit einem zwei- oder dreischichtigen Liner in vielen Fällen auch gar nicht zu realisieren.

Der Fachmann weiß, dass der Verbund von zwei verschiedenen Thermoplastschichten miteinander entweder über Materialverträglichkeit oder über chemische Reaktionen erfolgen kann. Materialverträglichkeit ist im Idealfall dann gegeben, wenn es sich um das gleiche Polymer handelt. Aus den Erfahrungen bei der Mehrschichtrohrentwicklung und beim Mehrkomponentenspritzgießen ist bekannt, dass chemische Bindungen recht gut unter erhöhter Temperatur und Verweilzeit realisiert werden können, wenn Schmelze auf Schmelze gelegt wird, beispielsweise bei der Coextrusion. Eine gute Haftung der gleichen Materialkombination ist aber ungleich schwerer zu realisieren, wenn erst durch eine heiße Schmelze eine erstarrte Oberfläche angeschmolzen werden muss und nur wenig Zeit für eine chemische Reaktion zur Verfügung steht. Selbst bei artgleichen Polymeren kann eine so hergestellte Verbindung eine unzureichende Festigkeit haben. Ein besserer Verbund kommt zustande, wenn die beiden Verbundpartner an ihrer Oberfläche vor dem Fügen angeschmolzen und dann aufeinander gepresst werden. Allerdings ist auch hierbei die Zeit für eine chemische Reaktion kurz, so dass Verbindungen zwischen gleichartigen Polymeren in der Regel eine bessere Haftung haben als Verbunde, die durch eine chemische Reaktion oder über Werkstoffkompatibilität (also durch Diffusionsprozesse) realisiert werden müssen.

Die Aufgabe der Erfindung ist es, ein Verfahren zur Herstellung eines Thermoplastic Composite Pipes zur Verfügung zu stellen, mit dem einerseits hohe Freiheitsgrade bei der Materialkombination von Liner und Tapematrix erzielt werden, und das andererseits eine sehr gute Haftung an den kritischen Schichtgrenzen ergibt.

Die zugrundeliegende Aufgabe wird dadurch gelöst, dass Tape und Liner in der Weise miteinander verbunden werden, dass eine Folie hergestellt wird, deren eine Oberfläche das Polymer A der Lineroberfläche und deren andere Oberfläche das Polymer B der Tapematrix enthält. Die Folie wird dann unter Wärmeaufbringung mit dem Liner und in einem weiteren Schritt unter Wärmeaufbringung mit der ersten Tapelage verbunden.

Gegenstand der Erfindung ist somit ein Verfahren zur Herstellung eines Thermoplastic Composite Pipes, das folgende Schritte enthält:
a) ein rohrförmiger Liner mit einer Wandung, die im Bereich der äußeren Oberfläche ein thermoplastisches Polymer A enthält, wird bereitgestellt;
b) ein Tape, das Verstärkungsfasern in einer Matrix enthält, welche ein thermoplastisches Polymer B enthält (im Folgenden auch "Verstärkungstape" genannt) wird bereitgestellt;
   wobei Polymer A und Polymer B unterschiedlich sind;
c) auf den rohrförmigen Liner wird eine Folie oder ein im Schritt d) hergestellter Verbund aus einer Folie und einem unter Schritt b) bereitgestellten Tape aufgebracht, wobei entweder vorher, gleichzeitig oder anschließend die äußere Oberfläche des Liners sowie die Kontaktoberfläche der Folie geschmolzen wird, wobei die Region der Kontaktoberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer A enthält, und wobei die Region der gegenüberliegenden Oberfläche der Folie aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer B enthält;
d) auf die äußere Oberfläche der Folie wird das unter Schritt b) bereitgestellte Tape aufgebracht, wobei entweder vorher, gleichzeitig oder anschließend die äußere Oberfläche der aufgebrachten Folie sowie die Kontaktoberfläche des Tapes geschmolzen wird;
e) gegebenenfalls werden auf die aufgebrachte Tapelage weitere Tapelagen, die Verstärkungsfasern in einer Matrix enthalten, stoffschlüssig aufgebracht,
f) gegebenenfalls wird zum Abschluss eine außenliegende Decklage aus einer polymeren Masse aufgebracht.

Die Erfindung soll im Folgenden näher erläutert werden.

Der rohrförmige Liner besitzt in der Regel einen Innendurchmesser im Bereich von 15 bis 400 mm, vorzugsweise im Bereich von 20 bis 300 mm und besonders bevorzugt im Bereich von 25 bis 255 mm. Seine Wandstärke liegt in der Regel im Bereich von 2 bis 40 mm, vorzugsweise im Bereich von 2,5 bis 30 mm und besonders bevorzugt im Bereich von 3 bis 20 mm. Der Liner kann einschichtig oder mehrschichtig sein. Wenn er einschichtig ist, besteht er aus einer Formmasse, die mindestens 30 Gew.-%, vorzugsweise mindestens 40 Gew.-%, besonders bevorzugt mindestens 50 Gew.-%, ganz besonders bevorzugt mindestens 60 Gew.-% und insbesondere bevorzugt mindestens 70 Gew.-%, mindestens 80 Gew.-% oder mindestens 85 Gew.-% des Polymers A enthält, jeweils bezogen auf die gesamte Formmasse. Wenn der Liner mehrschichtig ist, so besteht die äußere Schicht aus dieser Formmasse; die innere Schicht kann aus einer Formmasse bestehen, die beispielsweise eine Sperrwirkung oder eine chemische Schutzfunktion gegenüber Komponenten des zu fördernden Mediums besitzt. Innere und äußere Schichten können durch eine Haftvermittlerschicht miteinander verbunden sein.

Das Polymer A kann beispielsweise ein Polyolefin, ein Polyamid, ein Polyphthalamid (PPA), ein Polyethylennaphthalat, ein Polybutylennaphthalat, ein Fluorpolymer, ein Polyphenylensulfid (PPS), ein Polyethersulfon, ein Polyphenylsulfon (PPSU) oder ein Polyarylenetherketon wie PEEK oder PEK sein. In einer bevorzugten Ausführungsform enthält die Formmasse des einschichtigen Liners beziehungsweise die Formmasse der Außenschicht eines mehrschichtigen Liners neben dem Polymer A kein weiteres Polymer.

Das im Schritt b) bereitgestellte Tape enthält Verstärkungsfasern. Dies können beispielsweise Glasfasern, Carbonfasern, Aramidfasern, Borfasern, keramische Fasern (z. B. aus Al₂O₃ oder SiO₂), Basaltfasern, Siliciumcarbidfasern, Polyamidfasern, Polyesterfasern, Fasern aus flüssigkristallinem Polyester, Polyacrylnitrilfasern sowie Fasern aus Polyimid, Polyetherimid, Polyphenylensulfid, Polyetherketon oder Polyetheretherketon sein. Der Querschnitt der Fasern kann beispielsweise kreisförmig, rechteckig, oval, elliptisch oder kokonförmig sein. Mit Fasern, deren Querschnitt von der Kreisform abweicht (beispielsweise Flachglasfasern), kann ein höherer Faserfüllgrad im Fertigteil und damit eine höhere Festigkeit erzielt werden. Die Fasern können als Kurzfasern oder Langfasern eingesetzt werden oder vorzugsweise als Endlosfasern, etwa in Form eines Gewebes oder besonders bevorzugt als unidirektionale Faserlage.

Der Volumenanteil der Verstärkungsfasern im Tape beträgt in der Regel 10 bis 85 %, vorzugsweise 15 bis 80 %, besonders bevorzugt 20 bis 75 % und insbesondere bevorzugt 25 bis 70 %.

Die Matrix dieses Tapes besteht aus einer Formmasse, die mindestens 30 Gew.-%, vorzugsweise mindestens 40 Gew.-%, besonders bevorzugt mindestens 50 Gew.-%, ganz besonders bevorzugt mindestens 60 Gew.-% und insbesondere bevorzugt mindestens 70 Gew.-%, mindestens 80 Gew.-% oder mindestens 85 Gew.-% des Polymers B enthält, jeweils bezogen auf die gesamte Formmasse. Das Polymer B kann beispielsweise ein Polyolefin, ein Polyamid, ein Polyphthalamid (PPA), ein Polyethylennaphthalat, ein Polybutylennaphthalat, ein Fluorpolymer, ein Polyphenylensulfid (PPS), ein Polyethersulfon, ein Polyphenylsulfon (PPSU) oder ein Polyarylenetherketon wie PEEK oder PEK sein. Polymer A und Polymer B sind unterschiedlich. Hiermit ist gemeint, dass sie sich von der chemischen Zusammensetzung her unterscheiden; Unterschiede im Molekulargewicht, im Verzweigungsgrad oder in den Endgruppen sind unbeachtlich.

Das Tape kann nach jeder Methode des Standes der Technik hergestellt werden. Die Herstellung unidirektional endlosfaserverstärkter Tapes wird beispielsweise in der EP 0 056 703 A1, der EP 0 364 829 A2, der US 4 883 625, der WO 2012/149129, der WO 2013/188644 und der WO 2014/140025 näher beschrieben. Mögliche Herstellungsmethoden sind beispielsweise Schmelzeauftrag, Imprägnieren mit einer Polymerlösung und Entfernen des Lösemittels, Folienimprägnierung oder Pulverimprägnierung.

Üblicherweise hat das verwendete Tape eine Breite von 5 bis 500 mm und vorzugsweise eine Breite von 8 bis 200 mm, während die Dicke üblicherweise im Bereich von 0,1 bis 1 mm, vorzugsweise im Bereich von 0,1 bis 0,5 mm und besonders bevorzugt im Bereich von 0,15 bis 0,35 mm liegt. Die gesamte Compositlage, also die Summe aller Tapelagen, liegt hierbei im Bereich von 1 bis 100 mm, vorzugsweise im Bereich von 5 bis 90 mm und besonders bevorzugt im Bereich von 10 bis 80 mm. Für unterschiedliche Tapelagen können unterschiedliche Tapegeometrien eingesetzt werden. Die verwendeten Tapes können jeden geeigneten Querschnitt besitzen.

Die für Polymer A und Polymer B beispielhaft genannten Polymere sind dem Fachmann wohlbekannt und in einer Vielzahl von Handelstypen kommerziell erhältlich, weshalb eine nähere Beschreibung überflüssig ist. Als Polyolefin kommen beispielsweise Polypropylen, Polyethylen oder vernetztes Polyethylen in Frage. Geeignete Polyamide sind beispielsweise PA6, PA66, PA610, PA88, PA8, PA612, PA810, PA108, PA9, PA613, PA614, PA812, PA128, PA1010, PA10, PA814, PA148, PA1012, PA11, PA1014, PA1212 und PA12 oder ein auf einem dieser Polyamide basierendes Polyetheramid oder Polyetheresteramid. Das Polyphthalamid kann beispielsweise PA66/6T, PA6/6T, PA6T/MPMDT (MPMD steht für 2-Methylpentamethylendiamin), PA9T, PA10T, PA11T, PA12T, PA14T, PA6T/6I, PA6T/10T, PA6T/12, PA10T/11, PA10T/12 oder PA612/6T sein. Als Fluorpolymer sind beispielsweise Polyvinylidenfluorid (PVDF), Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), Ethylen-Chlortrifluorethylen-Copolymer (E-CTFE), Polychlortrifluorethylen (PCTFE), Chlortrifluorethylen-Perfluoralkylvinylether-Tetrafluorethylen-Copolymer (CPT), Tetrafluorethylen-Hexafluorpropen-Vinylidenfluorid-Copolymer (THV), Tetrafluorethylen-Hexafluorpropen-Copolymer (FEP) oder Tetrafluorethylen-Perfluoralkylvinylether-Copolymer (PFA) geeignet. In Frage kommen hier auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Die erfindungsgemäß eingesetzten Formmassen können neben Polymer A beziehungsweise Polymer B gegebenenfalls weitere Polymere sowie übliche Hilfs- oder Zusatzstoffe enthalten. In einer bevorzugten Ausführungsform enthält die Formmasse des Liners neben Polymer A keine weiteren Polymeren. In einer weiteren bevorzugten Ausführungsform enthalten die Formmassen sowohl des Liners als auch der Verstärkungstapes neben Polymer A beziehungsweise Polymer B keine weiteren Polymeren.

Die im Schritt c) aufgebrachte Folie ist in einer ersten Ausführungsform eine Einschichtfolie und in einer zweiten Ausführungsform eine Mehrschichtfolie.

Bei der ersten Ausführungsform besteht der Thermoplastanteil der Folie aus einer Formmasse, die mindestens 30 Gew.-%, vorzugsweise mindestens 35 Gew.-% und besonders bevorzugt mindestens 40 Gew.-% an Polymer A sowie mindestens 30 Gew.-%, vorzugsweise mindestens 35 Gew.-% und besonders bevorzugt mindestens 40 Gew.-% an Polymer B enthält, jeweils bezogen auf die gesamte Formmasse. Da die Polymere A und B unterschiedlich sind, sind sie miteinander in der Regel nicht verträglich. Die Formmasse muss in diesem Fall entweder einen Verträglichkeitsvermittler enthalten, oder die beiden Polymere A und B sind zumindest teilweise über chemische Reaktionen miteinander verknüpft.

Ein Beispiel für eine Formmasse mit Verträglichkeitsvermittler ist eine Formmasse, die zu mindestens 30 Gew.-% ein Polyamid wie PA11 oder PA12, zu mindestens 30 Gew.-% ein Fluorpolymer wie PVDF sowie eine wirksame Menge eines Acrylatcopolymers enthält. Geeignete Acrylatcopolymere sind beispielsweise in der EP 0 673 762 A2 offenbart. Vom Acrylatcopolymer kann in der Formmasse beispielsweise 0,1 bis 10 Gew.-% enthalten sein; bei der Herstellung der Formmasse ist es zweckmäßig, das Fluorpolymer und das Acrylatcopolymer in der Schmelze vorzumischen.

Ein Beispiel für eine Formmasse mit chemischer Verknüpfung ist eine Formmasse, die zu mindestens 30 Gew.-% ein Polyamid wie PA11 oder PA12 und zu mindestens 30 Gew.-% ein semiaromatisches Polyamid beziehungsweise Polyphthalamid (PPA) wie PA6T/6, PA6T/66, PA6T/6I, PA6T/10T oder PA6T/12 enthält. Beim Schmelzemischen treten hier aufgrund der hohen Temperaturen Umamidierungsreaktionen ein, so dass Blockcopolymere mit PA11- oder PA12-Blöcken und PPA-Blöcken entstehen. Diese wirken als Verträglichkeitsvermittler zwischen den beiden Komponenten.

Bei der zweiten Ausführungsform besteht die Mehrschichtfolie im einfachsten Fall aus zwei Schichten. Vorzugsweise besteht sie aus drei Schichten. Sie kann aber auch aus vier, fünf oder noch mehr Schichten bestehen. Die Zahl der Schichten ist nach oben hin nur dadurch begrenzt, das es nicht praktikabel ist, unbegrenzt dünne Schichten zu extrudieren. Aus Gründen der Praktikabilität liegt die Obergrenze daher bei 9 Schichten und vorzugsweise bei 7 Schichten.

Beispiele für zweischichtige Folien sind:
- Zum Liner orientierte Schicht aus einer Formmasse, die 50 bis 80 Gew.-% Polymer A und 20 bis 50 Gew.-% Polymer B enthält sowie zum Tape orientierte Schicht aus einer Formmasse, die 50 bis 80 Gew.-% Polymer B und 20 bis 50 Gew.-% Polymer A enthält. Die beiden Formmassen enthalten zweckmäßigerweise noch 0,1 bis 10 Gew.-% eines Verträglichkeitsvermittlers. Die Prozentangaben sind hierbei wie bei den folgenden Beispielen auf die gesamte Formmasse bezogen.
- Bei einem Liner mit einer äußeren PVDF-Oberfläche besteht die zum Liner orientierte Schicht der Folie aus einer Formmasse, die mindestens 30 Gew.-% PVDF und 2,5 bis 50 Gew.-% des in der EP 0 673 762 A2 offenbarten Acrylatcopolymers enthält; die zum Tape hin orientierte Schicht besteht zu mindestens 50 Gew.-% aus dem gleichen Polyamid wie die Matrix des Tapes, beispielsweise PA11 oder PA12.
- Bei einem Liner mit einer äußeren PPA-Oberfläche besteht die zum Liner orientierte Schicht der Folie aus einer Formmasse, die mindestens 40 Gew.-% des gleichen PPA enthält; die zum Tape hin orientierte Schicht besteht zu mindestens 50 Gew.-% aus dem gleichen Polyamid wie die Matrix des Tapes, beispielsweise PA11 oder PA12. Beide Formmassen können darüber hinaus 0,1 bis 25 Gew.-% eines säureanhydridgruppenhaltigen polyolefinischen Schlagzähmodifiers enthalten.
- Bei einem Liner mit einer äußeren PPS-Oberfläche besteht die zum Liner orientierte Schicht der Folie aus einer Formmasse, die mindestens 50 Gew.-% PPS sowie 3 bis 30 Gew.-% eines säureanhydridgruppenhaltigen polyolefinischen Schlagzähmodifiers enthält, der auch Acrylatbausteine enthalten kann (Handelsname z. B. LOTADER®); die zum Tape hin orientierte Schicht besteht zu mindestens 50 Gew.-% aus dem gleichen Polyamid wie die Matrix des Tapes, beispielsweise PA11 oder PA12.
- Bei einem Liner mit einer äußeren PA11- oder PA12-Oberfläche besteht die zum Liner orientierte Schicht der Folie aus einer Formmasse, die zu mindestens 40 Gew.-% das gleiche Polyamid sowie 30 bis 60 Gew.-% eines säureanhydridgruppenhaltigen Polypropylens oder Polyethylens enthält; die zum Tape hin orientierte Schicht besteht zu mindestens 50 Gew.-% aus dem gleichen Polypropylen oder Polyethylen wie die Matrix des Tapes.
- Bei einem Liner mit einer äußeren PEEK-Oberfläche besteht die zum Liner orientierte Schicht der Folie aus einer Formmasse, die zu mindestens 30 Gew.-% PEEK und zu 20 bis 70 Gew.-% ein Polyimid oder Polyetherimid enthält; die zum Tape hin orientierte Schicht besteht zu mindestens 50 Gew.-% aus dem gleichen PPA wie die Matrix des Tapes, wobei das PPA dieser Schicht vorzugsweise einen Überschuss an Aminoendgruppen zur Haftungsverbesserung enthält. Das PPA der Tapematrix kann sich im Endgruppengehalt hiervon unterscheiden.

Beispiele für dreischichtige Folien sind:
- Zum Liner orientierte Schicht aus einer Formmasse, die mindestens 40 Gew.-% Polymer A enthält. Daran schließt sich eine Haftvermittlerschicht aus einer Formmasse an, die mindestens 30 Gew.-% Polymer A, mindestens 30 Gew.-% Polymer B sowie gegebenenfalls 0,1 bis 20 Gew.-% Verträglichkeitsvermittler enthält. Die zum Tape hin orientierte Schicht enthält zu mindestens 40 Gew.-% Polymer B.
- Bei einem Liner mit einer äußeren PVDF-Oberfläche besteht die zum Liner orientierte Schicht der Folie aus einer Formmasse, die mindestens 30 Gew.-% und bevorzugt mindestens 50 Gew.-% PVDF enthält. Daran schließt sich eine Haftvermittlerschicht aus einem Acrylatcopolymer gemäß EP 0 673 762 A2 oder aus einer Polyamid/Acrylatcopolymermischung gemäß EP 0 618 390 A1 an. Die zum Tape hin orientierte Schicht besteht zu mindestens 50 Gew.-% aus dem gleichen Polyamid wie die Matrix des Tapes, genauso wie das Polyamid der Haftvermittlerschicht; Beispiele hierfür sind PA11 oder PA12.
- Bei einem Liner mit einer äußeren PPA-Oberfläche besteht die zum Liner hin orientierte Schicht der Folie aus einer Formmasse, die mindestens 40 Gew.-% des gleichen PPA enthält. Daran schließt sich eine Haftvermittlerschicht aus einer Formmasse an, die mindestens 30 Gew.-% dieses PPA sowie mindestens 30 Gew.-% des damit zu verbindenden Polyamids enthält. Die zum Tape hin orientierte Schicht besteht zu mindestens 50 Gew.-% aus dem gleichen Polyamid wie die Matrix des Tapes, beispielsweise PA11 oder PA12.
- Bei einem Liner mit einer äußeren PPS-Oberfläche besteht die zum Liner hin orientierte Schicht der Folie aus einer Formmasse, die zu mindestens 50 Gew.-% PPS enthält. Daran schließt sich eine Haftvermittlerschicht aus einer Formmasse an, die mindestens 50 Gew.-% PPS sowie 3 bis 30 Gew.-% eines säureanhydridgruppenhaltigen polyolefinischen Schlagzähmodifiers enthält, der auch Acrylatbausteine enthalten kann (Handelsname z. B. LOTADER®). Die zum Tape hin orientierte Schicht besteht zu mindestens 50 Gew.-% aus dem gleichen Polyamid wie die Matrix des Tapes, beispielsweise PA11 oder PA12.
- Bei einem Liner mit einer äußeren PA11- oder PA12-Oberfläche besteht die zum Liner hin orientierte Schicht der Folie aus einer Formmasse, die zu mindestens 40 Gew.-% das gleiche Polyamid enthält. Daran schließt sich eine Haftvermittlerschicht aus einem säureanhydridfunktionalisierten Polyethylen (falls die Tapematrix auf Polyethylen basiert) oder einem säureanhydridfunktionalisierten Polypropylen an (falls die Tapematrix auf Polypropylen basiert). Die zum Tape hin orientierte Schicht besteht zu mindestens 50 Gew.-% aus dem gleichen Polyethylen oder Polypropylen wie die Matrix des Tapes.
- Bei einem Liner mit einer äußeren PEEK-Oberfläche besteht die zum Liner hin orientierte Schicht der Folie aus einer Formmasse, die zu mindestens 40 Gew.-% PEEK enthält. Daran schließt sich eine Haftvermittlerschicht aus einer Formmasse an, die mindestens 50 Gew.-% eines Polyimids oder Polyetherimids enthält. Die zum Tape hin orientierte Schicht besteht zu mindestens 50 Gew.-% aus dem gleichen PPA wie die Matrix des Tapes, wobei das PPA dieser Schicht vorzugsweise einen Überschuss an Aminoendgruppen zur Haftungsverbesserung enthält. Das PPA der Tapematrix kann sich im Endgruppengehalt hiervon unterscheiden. Die Gew.-%-Angaben in diesen Beispielen sind nur exemplarisch; sie können den allgemeinen Angaben in den Ansprüchen und der Beschreibung entsprechend variiert werden.

Einschichtige Folien werden auf bekannte Weise durch Extrusion hergestellt, mehrschichtige Folien auf ebenfalls bekannte Weise durch Coextrusion, Extrusionsbeschichten oder Laminieren.

Die aufzubringende Folie liegt in der Regel als Tape vor. Das Folientape wird spiralförmig um den Liner herum gewickelt, wobei der Winkel abhängig von der Tapebreite und dem Linerdurchmesser ist. Es kommt nur darauf an, die äußere Oberfläche des Liners weitgehend lückenlos und vorzugsweise praktisch vollständig lückenlos zu bedecken; der Wickelwinkel spielt grundsätzlich keine Rolle, solange eine faltenfreie Wicklung dieser Folienlage möglich ist. Vorteilhafterweise wird die Folie so gewickelt, dass es weder zu Überlappungen noch zu Spalten kommt. Geringe Überlappungen oder Spalten können aber eventuell toleriert werden. Das Wickeln erfolgt unter einem Anpressdruck, der durch die Wickelspannung oder durch eine Anpressvorrichtung erzeugt wird. Um die Zugfestigkeit der Folie zu erhöhen und damit ein Reißen der erweichten Folie beim Aufwickeln zu verhindern, können eine Folienschicht oder mehrere Folienschichten unidirektionale Verstärkungsfasern enthalten. Um die Haftung zu den angrenzenden Schichten nicht zu verschlechtern, empfiehlt es sich hier jedoch, den Fasergehalt nicht zu hoch zu wählen. Im Allgemeinen sind Fasergehalte im Bereich von 3 bis 20 Vol.-% ausreichend. Eine spezielle Ausführungsform hiervon ist eine Folie aus drei oder mehr Schichten, bei der die Mittelschicht (im Falle einer Dreischichtfolie) oder mindestens eine der mittleren Schichten (im Falle einer Folie aus mehr als drei Schichten) unidirektionale Verstärkungsfasern enthält. In diesem Fall kann der Fasergehalt beispielsweise im Bereich von 3 bis 40 Vol.-% liegen. Die unidirektionalen Verstärkungsfasern sind generell in Axialrichtung des Folientapes orientiert. Derartige Mehrschichtfolien, die eine faserverstärkte Schicht enthalten, können beispielsweise durch Laminieren der einzelnen Schichten, durch Aufextrudieren unverstärkter Schichten auf eine verstärkte Schicht oder durch Aufextrudieren von Formmassen auf eine gespreizte Faserlage hergestellt werden.

In einer möglichen Ausführungsform wird die bereitgestellte Folie direkt mit dem Tape der ersten Tapelage flächig verbunden; hierbei werden das Tape und die an Polymer B reiche Seite der Folie miteinander verschweißt. Bei dieser Ausführungsform wird der Schritt d) vorweggenommen. Ein Vorteil dieser Ausführungsform ist, dass die benötigte Wickelspannung nicht zum Reißen der Folie führen kann, da diese durch das Tape verstärkt ist. Ein derartiger Verbund lässt sich beispielsweise durch Laminieren von Tape und Folie herstellen.

Wichtig ist, dass beim Verschweißen von Liner und Folie beide Kontaktflächen geschmolzen werden. In einer Ausführungsform werden beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst, etwa mit Hilfe der Wickelspannung oder mittels eines Andruckkörpers, etwa eines Rollers oder einer Backe. Bis zum Erstarren der aufgeschmolzenen Bereiche sollte der Anpressdruck dann gehalten werden. In einer weiteren Ausführungsform wird die Folie aufgewickelt und dann von außen entweder indirekt oder aber direkt mittels eines beheizbaren Andruckkörpers aufgeschmolzen. Die Heizleistung muss so dosiert werden, dass hierbei auch die äußere Oberfläche des Liners anschmilzt. Danach wird der Anpressdruck bis zum Erstarren der angeschmolzenen Bereiche aufrechterhalten. Dieses Verfahren kann mit Hilfe einer Wickelstation und einer anschließend folgenden Konsolidierungsstation durchgeführt werden, wie es beispielsweise in der WO 2012/118379 beschrieben ist.

Die Dicke der Folie muss ausreichend sein, um die Wickelkräfte aufnehmen zu können. Andererseits muss die Folie ausreichend biegsam sein. Die Folie hat in der Regel eine Dicke im Bereich von 0,1 bis 3 mm, vorzugsweise im Bereich von 0,3 bis 2 mm und besonders bevorzugt im Bereich von 0,5 bis 1,2 mm.

Im Schritt d) wird auf die so erhaltene Struktur unter Anwendung eines Anpressdrucks das Tape aufgebracht. Der nötige Anpressdruck kann wie bei der Folie durch die Wickelspannung oder mittels eines Andruckkörpers erzielt werden. Auch hier werden in einer Ausführungsform beide Kontaktflächen angeschmolzen, beispielsweise mittels Infrarotstrahlung, Heißluft, Heißgas, Laserstrahlung, Mikrowellenstrahlung oder direkt durch Kontaktheizung. Die angeschmolzenen Kontaktflächen werden dann aneinander gepresst. Bis zum Erstarren der aufgeschmolzenen Bereiche sollte der Anpressdruck dann gehalten werden. In einer weiteren Ausführungsform wird das Tape aufgewickelt und dann von außen entweder indirekt oder aber direkt mittels eines beheizbaren Andruckkörpers aufgeschmolzen. Die Heizleistung muss so dosiert werden, dass hierbei auch die äußere Oberfläche der vorher aufgebrachten Folie anschmilzt. Danach wird der Anpressdruck bis zum Erstarren der angeschmolzenen Bereiche aufrechterhalten. Das Wickeln des Tapes sowie das Aufwickeln gegebenenfalls weiterer Tapelagen im Schritt e) ist Stand der Technik; eine genaue Beschreibung des Vorgehens ist daher unnötig. Wegen Einzelheiten sei auf den in der Beschreibungseinleitung genannten Stand der Technik verwiesen.

Die im Schritt e) gegebenenfalls aufgewickelten weiteren Tapelagen besitzen in einer bevorzugten Ausführungsform eine Matrix aus einer Formmasse, die mindestens 30 Gew.-%, vorzugsweise mindestens 40 Gew.-%, besonders bevorzugt mindestens 50 Gew.-%, ganz besonders bevorzugt mindestens 60 Gew.-% und insbesondere bevorzugt mindestens 70 Gew.-%, mindestens 80 Gew.-% oder mindestens 85 Gew.-% des Polymers B enthält, jeweils bezogen auf die gesamte Formmasse. In einer weiteren Ausführungsform besitzen sie eine Matrix aus einer Formmasse auf Basis eines anderen Polymeren, sofern die stoffschlüssige Verbindung mit der vorhergehenden Tapelage gewährleistet werden kann. Beispielsweise kann in gleicher Weise wie oben beschrieben die Haftung durch eine entsprechend aufgebaute Ein- oder Mehrschichtfolie erzeugt werden. Auch bei diesen weiteren Tapelagen beträgt der Volumenanteil der Verstärkungsfasern im Tape in der Regel 10 bis 85 %, vorzugsweise 15 bis 80 %, besonders bevorzugt 20 bis 75 % und insbesondere bevorzugt 25 bis 70 %, wobei die Fasern vorzugsweise als unidirektionale Faserlage vorliegen.

Um die äußere Tapelage zu schützen, kann gegebenenfalls zum Abschluss eine außenliegende Decklage aus einer polymeren Masse aufgebracht werden. Hierbei handelt es sich entweder um eine thermoplastische Formmasse oder um ein thermoplastisches oder vernetzbares oder vernetztes Elastomer. Vorzugsweise haftet die Decklage fest auf der äußeren Tapelage. Hierzu ist es vorteilhaft, das Material der Decklage so zu wählen, dass es mindestens 30 Gew.-% des gleichen Polymeren wie in der Matrix der äußeren Tapelage oder eines hierzu kompatiblen Polymeren enthält. In diesem Fall kann die Decklage beispielsweise mittels eines Querspritz-Extrusionskopfes aufgebracht und so stoffschlüssig mit der Tapelage verbunden werden. Basiert die Decklage jedoch auf einem Polymer, das mit dem Material der äußeren Tapelage nicht kompatibel ist, so kann in gleicher Weise wie oben beschrieben die Haftung durch eine entsprechend aufgebaute Ein- oder Mehrschichtfolie erzeugt werden. Die Haftung kann auch durch Vernetzen eines vernetzbaren Elastomers erzeugt werden.

Gegenstand der Erfindung ist auch ein Thermoplastic Composite Pipe, das unter Verwendung des erfindungsgemäßen Verfahrens hergestellt werden kann. Es enthält, von innen nach außen, folgende Komponenten:
a) einen rohrförmigen Liner mit einer Wandung, die im Bereich der äußeren Oberfläche ein thermoplastisches Polymer A enthält,
b) eine mit dem Liner direkt und stoffschlüssig verbundene Zwischenlage, bei der die Region der mit dem Liner verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% Polymer A enthält, und bei der die Region der gegenüberliegenden, mit der anschließenden Tapelage verbundenen Kontaktfläche aus einer Formmasse besteht, die zu mindestens 30 Gew.-%, vorzugsweise zu mindestens 40 Gew.-%, besonders bevorzugt zu mindestens 50 Gew.-%, insbesondere bevorzugt zu mindestens 60 Gew.-% und ganz besonders bevorzugt zu mindestens 70 Gew.-% ein thermoplastisches Polymer B enthält;
c) eine mit der Zwischenlage direkt und stoffschlüssig verbundene Tapelage, die Verstärkungsfasern in einer Matrix enthält, welche Polymer B enthält,
d) gegebenenfalls eine oder mehrere weitere Tapelagen, die Verstärkungsfasern in einer Matrix enthalten und die mit der jeweils vorhergehenden Tapelage stoffschlüssig verbunden sind;
e) gegebenenfalls eine außenliegende Decklage aus einer polymeren Masse,
wobei Polymer A und Polymer B unterschiedlich sind.

Die einzelnen Ausgestaltungen dieses Thermoplastic Composite Pipe ergeben sich aus den obigen Angaben zum Herstellungsverfahren.

Beim erfindungsgemäßen Verfahren wird durch Verbund von gleichen Polymeren im kritischen Prozessschritt eine bessere Haftungsgüte erreicht. Daneben können einschichtige Linerrohre eingesetzt werden. Vorhandene Großrohr-Extrusionsanlagen können daher ohne Umbau weiter genutzt werden.

Das erfindungsgemäße Rohr eignet sich insbesondere für Offshoreanwendungen in der Öl- oder Gasförderung, etwa zum Transport der Produkte zu Plattformen, zum Anschluss an Stahlleitungen, als Transportleitung und insbesondere beispielsweise als Umbilical, als Riser, als Jumper Line, als Flowline, als Intervention Line, als Downline, als Injektionsleitung oder als Druckleitung. Die Verwendung für den Transport von gegebenenfalls unter Druck stehenden Kohlenwasserstoffen oder deren Gemischen wie Rohöl, Rohgas, Triphase (also ÖI-Gas-Wassergemisch), Processed Oil (schon teilweise am Meeresgrund aufgearbeitet), Processed Gas, Benzin oder Diesel, von Injektionsmedien wie Wasser (etwa zur Erhaltung des Drucks in der Kaverne), Ölfeldchemikalien, Methanol oder CO₂ sowie zur Führung von Hydraulikölen (beispielsweise für Aktoren am Meeresgrund) ist ebenfalls Gegenstand der Erfindung. Darüber hinaus ist das erfindungsgemäße Rohr auch als druckführende Leitung im Onshore-Bereich oder in anderen industriellen Anwendungen geeignet, insbesondere in solchen, in denen höhere Kräfte in Axialrichtung des Rohres kraftschlüssig zwischen Rohr und Anbindungselement übertragen werden müssen.

## Patentansprüche

1. Verfahren zur Herstellung eines Thermoplastic Composite Pipes, das folgende Schritte enthält:
a) ein rohrförmiger Liner mit einer Wandung, die im Bereich der äußeren Oberfläche ein thermoplastisches Polymer A enthält, wird bereitgestellt;
b) ein Tape, das Verstärkungsfasern in einer Matrix enthält, welche ein thermoplastisches Polymer B enthält, wird bereitgestellt, wobei Polymer A und Polymer B unterschiedlich sind;
c) auf den rohrförmigen Liner wird eine Folie oder ein im Schritt d) hergestellter Verbund aus einer Folie und einem unter Schritt b) bereitgestellten Tape aufgebracht, wobei entweder vorher, gleichzeitig oder anschließend die äußere Oberfläche des Liners sowie die Kontaktoberfläche der Folie geschmolzen wird;
d) auf die äußere Oberfläche der Folie wird das unter Schritt b) bereitgestellte Tape aufgebracht, wobei entweder vorher, gleichzeitig oder anschließend die äußere Oberfläche der aufgebrachten Folie sowie die Kontaktoberfläche des Tapes geschmolzen wird; **dadurch gekennzeichnet,**
**dass** die Oberfläche der Folie, die in Kontakt mit dem Liner gebracht wird, aus einer Formmasse besteht, die zu mindestens 30 Gew.-% Polymer A enthält, und dass die gegenüberliegende Oberfläche der Folie aus einer Formmasse besteht, die zu mindestens 30 Gew.-% Polymer B enthält.

2. Verfahren gemäß Anspruch 1,
**dadurch gekennzeichnet,**
**dass** die im Schritt a) bereitgestellte Folie und das im Schritt b) bereitgestellte Tape vor dem Schritt c) miteinander flächig so verbunden werden, dass das Tape und die an Polymer B reiche Seite der Folie miteinander verschweißt sind.

3. Verfahren gemäß einem der vorhergehenden Ansprüche,
**dadurch gekennzeichnet,**
**dass** auf die Lage aus dem aufgebrachten Tape eine oder mehrere weitere Tapelagen, die Verstärkungsfasern in einer Matrix enthalten, stoffschlüssig aufgebracht werden.

4. Verfahren gemäß einem der vorhergehenden Ansprüche,
**dadurch gekennzeichnet,**
**dass** zum Abschluss eine außenliegende Decklage aus einer polymeren Masse aufgebacht wird.

5. Verfahren gemäß einem der vorhergehenden Ansprüche,
**dadurch gekennzeichnet,**
**dass** die Folie aus zwei, drei oder mehr Schichten besteht, die stoffschlüssig miteinander verbunden sind.

6. Verfahren gemäß einem der vorhergehenden Ansprüche,
**dadurch gekennzeichnet,**
**dass** mindestens eine Schicht der Folie unidirektionale Verstärkungsfasern enthält.

7. Verfahren gemäß einem der vorhergehenden Ansprüche,
**dadurch gekennzeichnet,**
**dass** das Polymer A des Liners ausgewählt ist aus der Gruppe Polyolefin, Polyamid, Polyphthalamid, Polyethylennaphthalat, Polybutylennaphthalat, Fluorpolymer, Polyphenylensulfid, Polyethersulfon, Polyphenylsulfon und Polyarylenetherketon.

8. Verfahren gemäß einem der vorhergehenden Ansprüche,
**dadurch gekennzeichnet,**
**dass** das Polymer B des Tapes ausgewählt ist aus der Gruppe Polyolefin, Polyamid, Polyphthalamid, Polyethylennaphthalat, Polybutylennaphthalat, Fluorpolymer, Polyphenylensulfid, Polyethersulfon, Polyphenylsulfon und Polyarylenetherketon.

9. Verfahren gemäß einem der vorhergehenden Ansprüche,
**dadurch gekennzeichnet,**
**dass** die Faserverstärkung der Tapes als unidirektionale Faserlage vorliegt.

10. Verfahren gemäß einem der vorhergehenden Ansprüche,
**dadurch gekennzeichnet, dass** der Faseranteil der Tapes 10 bis 85 Vol.-% beträgt.

11. Thermoplastic Composite Pipe, das folgende Komponenten enthält:
a) einen rohrförmigen Liner mit einer Wandung, die im Bereich der äußeren Oberfläche ein thermoplastisches Polymer A enthält;
b) eine mit dem Liner direkt und stoffschlüssig verbundene Zwischenlage, bei der die Region der mit dem Liner verbundenen Kontaktfläche aus einer Formmasse besteht, die zu mindestens 30 Gew.-% Polymer A enthält, und bei der die Region der gegenüberliegenden, mit der anschließenden Tapelage verbundenen Kontaktfläche aus einer Formmasse besteht, die zu mindestens 30 Gew.-% ein thermoplastisches Polymer B enthält;
c) eine mit der Zwischenlage direkt und stoffschlüssig verbundene Tapelage, die Verstärkungsfasern in einer Matrix enthält, welche Polymer B enthält,
d) gegebenenfalls eine oder mehrere weitere Tapelagen, die Verstärkungsfasern in einer Matrix enthalten und die mit der jeweils vorhergehenden Tapelage stoffschlüssig verbunden sind;
e) gegebenenfalls eine außenliegende Decklage aus einer polymeren Masse,
wobei Polymer A und Polymer B unterschiedlich sind.

12. Thermoplastic Composite Pipe gemäß Anspruch 11,
**dadurch gekennzeichnet,**
**dass** es ein Umbilical, ein Riser, eine Jumper Line, eine Flowline, eine Intervention Line, eine Downline, eine Injektionsleitung oder eine Druckleitung ist.

13. Verwendung des Thermoplastic Composite Pipes gemäß einem der Ansprüche 11 und 12 für den Transport von Rohöl, Rohgas, Triphase, Processed Oil, Processed Gas, Benzin, Diesel oder Injektionsmedien oder zur Führung von Hydraulikölen.

## Claims

1. Process for producing a thermoplastic composite pipe, comprising the following steps:
a)providing a tubular liner having a wall comprising a thermoplastic polymer A in the region of the outer surface;
b)providing a tape comprising reinforcing fibres in a matrix comprising a thermoplastic polymer B, where polymer A and polymer B are different;
c)applying a film or a composite which is produced in step d) and is composed of a film and a tape provided in step b) to the tubular liner, with melting of the outer surface of the liner and of the contact surface of the film either beforehand, simultaneously or thereafter;
d)applying the tape provided in step b) to the outer surface of the film, with melting of the outer surface of the film applied and of the contact surface of the tape either beforehand, simultaneously or thereafter;
**characterized in that**
the surface of the film which is brought into contact with the liner consists of a moulding compound comprising polymer A to an extent of at least 30% by weight, and **in that** the opposite surface of the film consists of a moulding compound comprising polymer B to an extent of at least 30% by weight.

2. Process according to Claim 1,
**characterized in that**
the film provided in step a) and the tape provided in step b), prior to step c), are bonded to one another over an area such that the tape and the side of the film that is rich in polymer B are welded to one another.

3. Process according to either of the preceding claims,
**characterized in that**
one or more further tape laminas comprising reinforcing fibres in a matrix are cohesively bonded to the lamina of the tape applied.

4. Process according to any of the preceding claims,
**characterized in that**
an outer cover lamina of a polymeric material is finally applied.

5. Process according to any of the preceding claims,
**characterized in that**
the film consists of two, three or more layers cohesively bonded to one another.

6. Process according to any of the preceding claims,
**characterized in that**
at least one layer of the film comprises unidirectional reinforcing fibres.

7. Process according to any of the preceding claims,
**characterized in that**
the polymer A of the liner is selected from the group of polyolefin, polyamide, polyphthalamide, polyethylene naphthalate, polybutylene naphthalate, fluoropolymer, polyphenylene sulphide, polyether sulphone, polyphenyl sulphone and polyarylene ether ketone.

8. Process according to any of the preceding claims,
**characterized in that**
the polymer B of the tape is selected from the group of polyolefin, polyamide, polyphthalamide, polyethylene naphthalate, polybutylene naphthalate, fluoropolymer, polyphenylene sulphide, polyether sulphone, polyphenyl sulphone and polyarylene ether ketone.

9. Process according to any of the preceding claims,
**characterized in that**
the fibre reinforcement of the tapes is in the form of a unidirectional fibre lamina.

10. Process according to any of the preceding claims,
**characterized in that** the fibre content of the tapes is 10% to 85% by volume.

11. Thermoplastic composite pipe comprising the following components:
a)a tubular liner having a wall comprising a thermoplastic polymer A in the region of the outer surface;
b)an intermediate lamina which is directly and cohesively bonded to the liner and in which the region of the contact area bonded to the liner consists of a moulding compound comprising polymer A to an extent of at least 30% by weight, and in which the region of the opposite contact area bonded to the subsequent tape lamina consists of a moulding compound comprising a thermoplastic polymer B to an extent of at least 30% by weight;
c)a tape lamina which is directly and cohesively bonded to the intermediate lamina and comprises reinforcing fibres in a matrix comprising polymer B;
d) optionally one or more further tape laminas which comprise reinforcing fibres in a matrix and are each cohesively bonded to the prior tape lamina;
e)optionally an outer cover lamina composed of a polymeric material;
where polymer A and polymer B are different.

12. Thermoplastic composite pipe according to Claim 11,
**characterized in that**
it is an umbilical, a riser, a jumper line, a flowline, an intervention line, a downline, an injection line or a pressure line.

13. Use of the thermoplastic composite pipe according to either of Claims 11 and 12 for the transport of crude oil, crude gas, triphase, processed oil, processed gas, gasoline, diesel or injection media, or for conduction of hydraulic oils.

## Revendications

1. Procédé de fabrication d'un tuyau composite thermoplastique, contenant les étapes suivantes :
a) on prépare une gaine en forme de tuyau avec une paroi qui contient un polymère thermoplastique A dans le domaine de sa surface externe ;
b) on prépare une bande contenant des fibres de renfort dans une matrice qui contient un polymère thermoplastique B, le polymère A et le polymère B étant différents ;
c) on applique sur la gaine en forme de tuyau une feuille ou un composé fabriqué à l'étape d) constitué d'une feuille et d'une bande préparée à l'étape b), la surface externe de la gaine ainsi que la surface de contact de la feuille étant fondues soit préalablement, soit simultanément, soit ensuite ;
d) on applique une bande préparée à l'étape b) sur la surface externe de la feuille, la surface externe de la feuille ainsi que la surface de contact de la bande étant fondues soit préalablement, soit simultanément, soit ensuite ;
**caractérisé en ce que** la surface de la feuille, qui est mise en contact avec la gaine, est constituée d'une masse à mouler qui contient au moins 30 % en poids de polymère A, et la surface opposée de la deuxième feuille est constituée d'une masse à mouler qui contient au moins 30 % en poids de polymère B.

2. Procédé selon la revendication 1, **caractérisé en ce que** la feuille préparée à l'étape a) et la bande préparée à l'étape b) sont liées entre elles avant l'étape c) sur toute leur surface, de sorte que la bande et la face riche en polymère B de la feuille soient soudées l'une à l'autre.

3. Procédé selon l'une des revendications précédentes, **caractérisé en ce qu'**une ou plusieurs couches de bande contenant des fibres de renfort dans une matrice sont appliquées par accouplement de matière sur la bande appliquée.

4. Procédé selon l'une des revendications précédentes, **caractérisé en ce qu'**on applique à la fin une couche de couverture externe constituée d'une masse polymère.

5. Procédé selon l'une des revendications précédentes, **caractérisé en ce que** la feuille se compose de deux ou trois couches ou plus, qui sont liées ensemble par accouplement de matière.

6. Procédé selon l'une des revendications précédentes, **caractérisé en ce qu'**au moins une couche de la feuille contient des fibres de renfort unidirectionnelles.

7. Procédé selon l'une des revendications précédentes, **caractérisé en ce que** le polymère A de la gaine est choisi dans le groupe constitué de polyoléfine, polyamide, polyphtalamide, polyéthylène téréphtalate, polyéthylène naphtalate, fluoropolymère, polysulfure de phénylène, polyéthersulfone, polyphénylsulfone et polyarylènéthercétone.

8. Procédé selon l'une des revendications précédentes, **caractérisé en ce que** le polymère B de la bande préparée à l'étape b) est choisi dans le groupe constitué de polyoléfine, polyamide, polyphtalamide, polyéthylène téréphtalate, polyéthylène naphtalate, fluoropolymère, polysulfure de phénylène, polyéthersulfone, polyphénylsulfone et polyarylènéthercétone.

9. Procédé selon l'une des revendications précédentes, **caractérisé en ce que** le renfort de fibres de la bande se présente sous forme d'une couche de fibre unidirectionnelle.

10. Procédé selon l'une des revendications précédentes, **caractérisé en ce que** la teneur en fibres de la bande est de 10 à 85 % en volume.

11. Tuyau composite thermoplastique contenant les composants suivants :
a) une gaine en forme de tuyau avec une paroi qui contient un polymère thermoplastique A dans le domaine de sa surface externe ;
b) une couche intermédiaire liée directement et par accouplement de matière avec la gaine, dans laquelle la région de la surface de contact liée à la gaine se compose d'une masse à mouler contenant au moins 30 % en poids de polymère A, et dans laquelle la région de la surface opposée de la surface de contact liée à la couche de bande adjacente se compose d'une masse à mouler contenant au moins 30 % en poids d'un polymère thermoplastique B ;
c) une couche de bande liée directement et par accouplement de matière à la couche intermédiaire, contenant des fibres de renfort dans une matrice qui contient du polymère B ;
d) éventuellement, une ou plusieurs couches de bande contenant des fibres de renfort dans une matrice et liées par accouplement de matière à la couche de bande précédente ;
e) éventuellement, une couche de couverture constituée d'une masse polymère ;
le polymère A et le polymère B étant différents.

12. Tuyau composite thermoplastique selon la revendication 11, **caractérisé en ce qu'**il est un câble ombilical, un riser, un câble volant, une conduite, une ligne d'intervention, une liaison descendante, une conduite d'injection ou une conduite sous pression.

13. Utilisation du tuyau composite thermoplastique selon une des revendications 11 et 12 pour le transport de pétrole brut, de gaz naturel, de mélange triphasique, de pétrole raffiné, de gaz naturel raffiné, d'essence, de diesel ou de milieux d'injection ou pour l'acheminement d'huiles hydrauliques.
